# EUROPÄISCHE PATENTSCHRIFT

(11) **EP 2 894 393 B1**
(45) Veröffentlichungstag und Bekanntmachung des Hinweises auf die Patenterteilung: **31.08.2016**
(21) Anmeldenummer: 14191863.1
(22) Anmeldetag: 05.11.2014
(51) Int. Cl.: F21S 9/02, H02J 9/06, H05B 33/08

(54) **LED-Board**
LED board
Carte DEL

(30) Priorität: 20.11.2013 DE 102013112832
(43) Veröffentlichungstag der Anmeldung: 15.07.2015
(73) Patentinhaber: Siteco Beleuchtungstechnik GmbH, 83301 Traunreut (DE)
(72) Erfinder: Auer, Markus, 83026 Rosenheim (DE); Lechner, Markus, 84558 Kirchweidach (DE)
(74) Vertreter: Schmidt, Steffen

(56) Entgegenhaltungen:
- WO-A2-2009/147563
- DE-A1-102009 022 874
- US-A1- 2010 176 724
- US-A1- 2011 232 143
- US-A1- 2013 249 403
- US-A1- 2013 265 746

## Beschreibung

Die vorliegende Erfindung betrifft ein LED-Board, insbesondere ein LED-Board, welches zur Verwendung mit LED-Betriebsgeräten eingerichtet ist, die eine Notstromversorgung, z.B. eine interne oder externe Batterie, aufweisen.

Für Leuchten oder Lichtketten, die als Leuchtmittel LEDs (lichtemittierende Dioden, worunter auch organische lichtemittierende Dioden zu verstehen sind) aufweisen, ist es im Stand der Technik üblich, eine Vielzahl von LEDs jeweils auf einer Platine anzuordnen, wobei die Platine außerdem die elektrischen Schaltkreise beinhaltet, welche die LEDs in geeigneter Weise miteinander verschalten, um sie durch ein externes Betriebsgerät, auch LED-Treiber genannt, mit Spannung zu versorgen. Die Platinen mit den darauf angeordneten LEDs werden auch als LED-Boards bezeichnet.

Für die industrielle Anwendung von LED-Leuchten ist es wünschenswert, die Leuchten auch mit einer Notstromversorgung zu versehen, so dass bei einem Ausfall des normalen Stromnetzes ein Notstrombetrieb z.B. über einen wiederaufladbaren Energiespeicher oder Batterie ermöglicht wird. Eine modulare LED-Beleuchtung, welche mit einer Notstromlichtfunktion ausgestattet ist, ist beispielsweise in DE 10 2010 003 779 A1 offenbart. Ein LED-Modul weist eine LED-Strecke auf, die mit einer Konstantstromquelle elektrisch versorgt werden. Eine Notlichtbetriebsschaltung, die mit einem wiederaufladbaren Energiespeicher verbunden ist, übernimmt bei Ausfall der normalen Versorgungsspannung die Speisung der modularen LED-Beleuchtung.

Aufgabe der vorliegenden Erfindung ist es, ein LED-Board bereitzustellen, welches in besonderer Weise für den Notstrombetrieb mit einem LED-Betriebsgerät eingerichtet ist, wobei insbesondere eine einfache Herstellung der LED-Boards zur Ausbildung einer Anordnung aus mehreren LED-Boards gewünscht ist und die LED-Boards im Notstrombetrieb energiesparend arbeiten sollen.

Gelöst wird die Aufgabe durch ein LED-Board mit einer Vielzahl von LEDs, einem Spannungseingang und -ausgang zum Anschluss an eine Versorgungsspannung eines mit einem externen LED-Betriebsgeräte verbundenen LED-Treibers, und zwei Notstromanschlüssen zum Anschluss an eine Notstrombrücke des externen LED-Betriebsgerätes, wobei ein Teil der Vielzahl von LEDs in wenigstens einer durchgehenden Reihe von LEDs geschaltet ist, deren Anfang und Ende an dem Spannungseingang und -ausgang der Versorgungsspannung anliegt, und weitere LEDs in einer aus zwei Teilstücken bestehenden Reihe von LEDs geschaltet sind, wobei jedes Teilstück eine oder mehrere LEDs aufweist und der Anfang des ersten Teilstücks und das Ende des zweiten Teilstücks parallel zu der durchgehenden LED-Reihe geschaltet sind und das Ende des ersten Teilstücks und der Anfang des zweite Teilstücks an den zwei Notstromanschlüssen für die Notstrombrücke anliegen.

Die LED-Boards werden mit einem bekannten LED-Betriebsgerät betrieben, welches einen internen und externen LED-Treiber aufweist, um die LED-Boards im Normalstrombetrieb mit Gleichspannung zu versorgen. Ferner weisen die LED-Betriebsgeräte Notstrombrücken auf, welche durch Relais im Normalstrombetrieb überbrückt sind und im Falle eines Stromausfalls mit einer internen oder externen Batterie oder wiederaufladbarem Energiespeicher gekoppelt werden. Die Besonderheit der LED-Boards erlaubt es, jeweils zwei identische LED-Boards an eines der genannten LED-Betriebsgeräte anzuschließen und gemeinsam mit diesem zu betreiben. Dadurch sind die LED-Boards einfach herstellbar. Durch die Besonderheit der Aufteilung in zwei parallele LED-Reihen, wobei eine Reihe durch zwei Teilstücke gebildet ist, ist es möglich, beim Stromausfall jeweils nur das zweite Teilstück des ersten LED-Boards und das erste Teilstück des zweiten LED-Boards über Notstromenergieversorgung des LED-Betriebsgeräts zu betreiben. Die übrigen LEDs in der durchgehenden Reihe und in den beiden übrigen Teilstücken bleiben im Notstrombetrieb dunkel. Dadurch ist eine für den Notfall ausreichende, wenn auch lichtschwächere Beleuchtung gewährleistet. Der Vorteil von dem Betrieb einer verringerten Anzahl von LEDs im Notfall ist ferner daran zu sehen, dass die Batterie oder der Akkumulator für die Notstromversorgung geringer belastet wird. Es ist zwar für herkömmliche Leuchten bekannt, im Falle einer Notstromversorgung nur eine geringe Anzahl von herkömmlichen Leuchten zu betreiben. Durch die Besonderheit der LED-Boards gemäß der vorliegenden Erfindung ist es jedoch möglich, Teile der Vielzahl von LEDs von jeweils den gleichen Boards für den Notstrom zu verwenden. Daher braucht keine separate Einrichtung für den Notfall vorgesehen zu werden und die LEDs, welche für den Notfall im Betrieb bleiben, dienen auch im Normalbetrieb über die Notversorgung zur Beleuchtung.

Gemäß einer bevorzugten Ausführungsform weist das erste und das zweite Teilstück der aus zwei Teilstücken bestehenden LED-Reihe jeweils die gleiche Anzahl von LEDs auf. Dies hat den Vorteil, dass der Spannungsabfall über beide Teilstücke gleich hoch ist, so dass jede einzelne LED der beiden Teilstücke mit der gleichen Spannung versorgt wird. Dies gilt sowohl für den Normalbetrieb als auch für den Notstrombetrieb.

Gemäß einer bevorzugten Ausführungsform sind ferner die Anzahl der LEDs in der wenigstens einen durchgehenden Reihe von LEDs gleich der Anzahl von LEDs in dem ersten und dem zweiten Teilstück. Dadurch ist im Normalstrombetrieb der Spannungsabfall über jede LED der durchgehenden Reihe und in den aus zwei Teilstücken bestehenden LED-Reihe gleich hoch.

Gemäß einer bevorzugten Ausführungsform sind die LEDs in dem ersten und zweiten Teilstück in regelmäßigen Abständen zwischen den LEDs der wenigstens einen durchgehenden Reihe angeordnet. Dadurch leuchtet im Notfall eine Untergruppe von LEDs, nämlich die LEDs von jeweils dem ersten oder dem zweiten Teilstück eines Boards, die in regelmäßigen Abständen über die Anordnung von LEDs verteilt sind. Dies gewährleistet eine gleichmäßige Ausleuchtung über die Anordnung von LEDs, welche aus mehreren jeweils gleichen LED-Boards gebildet ist. Beispielsweise kann jede fünfte bzw. sechste LED innerhalb einer linearen Anordnung von LEDs aus dem ersten bzw. zweiten Teilstück der aus zwei Teilstücken bestehenden Reihe gebildet sein. Im Notstrombetrieb leuchtet dann jede fünfte bzw. sechste LED in einer linearen Anordnung von LEDs. Im Normalstrombetrieb leuchten alle LEDs der linearen Anordnung.

Gemäß einer bevorzugten Ausführungsform weist das LED-Board wenigstens noch eine zweite durchgehende Reihe von LEDs parallel zur ersten durchgehenden Reihe von LEDs auf. Dadurch ist die Gesamtzahl der LEDs für den Normalstrombetrieb wesentlich höher als die Anzahl der LEDs für den Notstrombetrieb. Gemäß einer Weiterbildung dieser Ausführungsform ist die Anzahl der LEDs in der ersten und zweiten durchgehenden Reihe jeweils die gleiche. Dadurch ist der Spannungsabfall über LEDs in den durchgehenden Reihen im Normalstrombetrieb jeweils konstant, so dass alle LEDs mit der gleichen Betriebsspannung versorgt werden.

Beispielsweise umfasst das LED-Board insgesamt sechs oder ein Vielfaches von sechs LEDs und jeweils ein Drittel der LEDs ist in der ersten und der zweiten durchgehenden Reihe von LEDs enthalten und jeweils ein Sechstel der LEDs ist in dem ersten und dem zweiten Teilstück der aus zwei Teilstücken bestehenden Reihe von LEDs enthalten. Im Notstrombetrieb leuchten in dieser Ausführungsform ein Sechstel der LEDs, während im Normalstrombetrieb alle LEDs leuchten.

Gemäß einer weiteren bevorzugten Ausführungsform verlaufen parallel zur ersten und zweiten durchgehenden Reihe von LEDs noch eine oder mehrere weitere durchgehenden Reihen von LEDs, wobei vorzugsweise jede der durchgehenden Reihen von LEDs die gleiche Anzahl von LEDs aufweist. Bei dieser Ausführungsform ist der Anteil von LEDs, welche nur im Normalstrombetrieb leuchten, gegenüber der Anzahl von LEDs, die für den Notstrom und Normalstrombetrieb vorgesehen sind, weiter erhöht. Beispielsweise können drei oder vier durchgehende Reihen von LEDs jeweils parallel zu der einen aus zwei Teilstücken bestehenden LED-Reihe vorgesehen sein.

Gemäß einer bevorzugten Ausführungsform weist das LED-Board N LEDs und j durchgehende Reihen von LEDs auf und jede durchgehende Reihe weist (1/j+1) N LEDs auf und die zwei Teilstücke der aus zwei Teilstücken bestehenden LED-Reihe weist jeweils (1/2(j+1)). N LEDs auf. In dieser Ausführungsform dienen (1/2(j+1)). N LEDs für den Notstrombetrieb, während alle N LEDs für den Normalstrombetrieb eingerichtet sind. Gemäß einer Weiterbildung dieser Ausführungsform sind die LEDs des ersten und zweiten Teilstück an jeweils der (2j-1)-ten und 2j-ten Stelle zwischen den übrigen LEDs der durchgehenden Reihe angeordnet. Im Fall eines Stromausfalls leuchten im Notstrombetrieb dann jeweils die LEDs an der (2j-1)-ten bzw. 2j-ten Stelle der linearen Anordnung von N LEDs.

Gemäß einer bevorzugen Ausführungsform des LED-Boards weisen die eine oder die mehreren durchgehenden Reihen von LEDs eine Vielzahl von LEDs in einer ersten Farbe auf und die aus zwei Teilstücken bestehende Reihe von LEDs weist wenigstens teilweise LEDs einer anderen Lichtfarbe auf. Die Farben können so gewählt sein, dass sich im Normalstrombetrieb, in welchem alle LEDs leuchten, eine weiße Farbe ergibt, während im Notstrombetrieb, bei der nur eine Untergruppe der LEDs leuchtet, sich eine andere Farbe, z.B. Rot, ergibt.

Gemäß einem weiteren Aspekt der vorliegenden Erfindung ist eine Anordnung aus jeweils zwei LED-Boards nach einer der vorhergehenden beschriebenen Ausführungsformen in Verbindung mit einem LED-Betriebsgerät vorgesehen, wobei der Spannungsausgang des ersten LED-Boards an dem Spannungseingang des zweiten LED-Boards angeschlossen ist, der Spannungseingang des ersten LED-Boards und der Spannungsausgang des zweiten LED-Boards an einer Versorgungsspannung eines mit dem externen LED-Betriebsgerät verbundenen LED-Treibers angeschlossen sind und die zwei Notstromanschlüsse des ersten LED-Boards mit einer ersten Notstrombrücke des externen LED-Betriebsgeräts überbrückt sind und die zwei Notstromeingänge des zweiten LED-Boards mit einer zweiten Notstrombrücke des externen LED-Betriebsgerätes überbrückt sind, wobei im Falle eines Ausfalls der Netzversorgung des LED-Betriebsgerätes die Versorgungsspannung unterbrochen ist, die zwei Notstrombrücken geöffnet sind und der Notstromausgang des ersten LED-Boards und der Notstromeingang des zweiten LED-Boards an einer Notspannung, insbesondere an einer Batteriespannung des LED-Betriebsgerätes, anliegen.

Diese Anordnung besitzt den besonderen Vorteil, dass jeweils zwei gleiche LED-Boards mit einem LED-Betriebsgerät verbunden werden können. Dadurch ist die Herstellung der Anordnung aus einer Vielzahl von LED-Boards erheblich vereinfacht.

Weitere Merkmale und Vorzüge der vorliegenden Erfindung werden nachfolgend anhand einer bevorzugten Ausführungsform in Verbindung mit den Figuren erläutert. In den Figuren ist Folgendes dargestellt:
- Figur 1: zeigt eine Schaltungsanordnung und eine Aufsicht eines LED-Boards.
- Figur 2: zeigt eine Schaltung eines LED-Betriebsgeräts im Normalstrombetrieb.
- Figur 3: zeigt die Schaltung eines LED-Betriebsgeräts nach Figur 2, jedoch im Notstrombetrieb.
- Figur 4: zeigt eine Anordnung aus zwei LED-Boards jeweils nach Figur 1 in Verbindung mit einem LED-Betriebsgerät nach Figur 2 im Normalstrombetrieb, wobei die Schaltungsanordnung in der oberen Figurenhälfte und die Aufsicht auf die LED-Boards in der unteren Figurenhälfte dargestellt ist. Die leuchtenden LEDs sind mit einem x markiert.
- Figur 5: zeigt eine Anordnung gemäß Figur 4 jedoch im Notstrombetrieb.

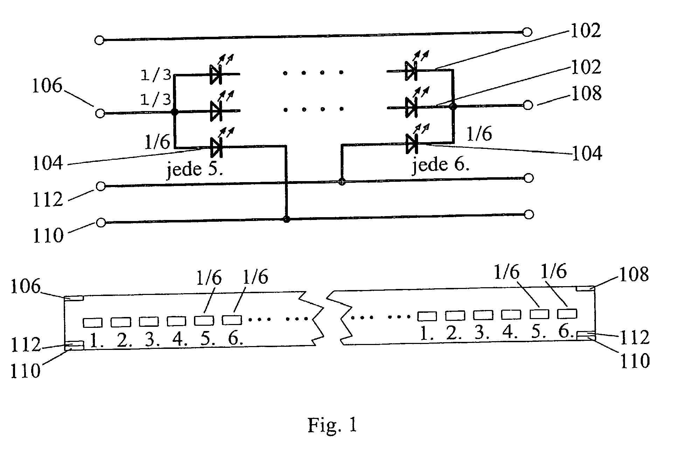

Bezug nehmend auf die Figur 1 ist ein LED-Board gemäß der vorliegenden Erfindung dargestellt. In der oberen Figurenhälfte ist die Schaltungsanordnung wiedergegeben, während in der unteren Figurenhälfte eine Aufsicht auf ein Board schematisch dargestellt ist, wobei die Darstellung der Aufsicht mittig unterbrochen ist.

Die Schaltungsanordnung eines LED-Boards umfasst zwei durchgehende Reihen von LEDs 102 und eine aus zwei Teilstücken 104 bestehende dritte Reihe von LEDs. In der Figur 1 ist zu verstehen, dass jedes Schaltungssymbol einer LED jeweils eine einzelne oder eine ganze Gruppe von LEDs, die in Reihe geschaltete sind, darstellen kann. Das LED-Board besitzt demnach eine Vielzahl von LEDs, wobei ein Drittel der LEDs jeweils in der durchgehenden ersten und der durchgehenden zweiten LED-Reihe 102 angeordnet sind und jeweils ein Sechstel der LEDs in dem ersten bzw. zweiten Teilstück 104 der aus zwei Teilstücken 104 bestehenden LED-Reihe angeordnet sind. Die zwei durchgehenden LED-Reihen 102 und die aus zwei Teilstücken 104 bestehende LED-Reihe sind parallel geschaltet. Der Eingang 106 und der Ausgang 108 der parallelen Schaltungsreihen sind dafür vorgesehen, um eine Versorgungsspannung anzulegen.

Die aus zwei Teilstücken 104 bestehende LED-Reihe ist mittig unterbrochen und das Ende des ersten Teilstücks 104 und der Anfang des zweiten Teilstücks 104 sind separat aus der Schaltungsanordnung als Anschlüsse 110 und 112 herausgeführt, um sie an eine LED-Notstrombrücke, wie nachfolgend beschrieben, anzuschließen.

Auf dem Board sind die LEDs der ersten und zweiten durchgehenden Reihe 102 jeweils hintereinander angeordnet, gefolgt von den LEDs des ersten Teilstücks 104 und des zweiten Teilstücks 104 des aus zwei Teilstücken bestehenden Reihe. An der Position 5. und 6. in dem Board befindet sich daher jeweils eine LED aus dem ersten und dem zweiten Teilstück.

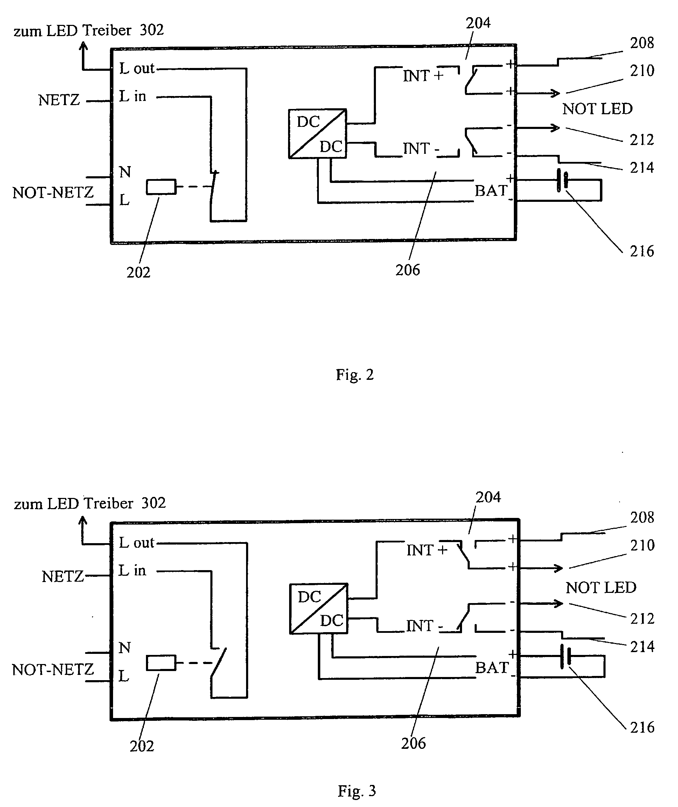

Das LED-Board, wie vorhergehend beschrieben, ist dafür eingerichtet, mit einem LED-Betriebsgerät betrieben zu werden, welches in den Figuren 2 und 3 dargestellt ist.

Das LED-Betriebsgerät umfasst einen Netzversorgungseingang, sowie eine Not-NetzEingang. Der Netzversorgungseingang Lᵢₙ wird im Normalstrombetrieb zu einem Netzausgang Lₒᵤₜ, der mit einem LED-Treiber verbunden wird, durchgeleitet. Dazu ist ein Relais 202 im LED-Betriebsgerät geschlossen, wie in Figur 2 dargestellt ist. Wenn ein elektrisches Signal auf einen Not-Netzeingang des LED-Betriebsgeräts angelegt wird, öffnet sich das Relais 202 und unterbricht dadurch die Versorgung von Lᵢₙ zu Lₒᵤₜ. Gleichzeitig werden zwei weitere Relais 204 und 206 umgeschaltet. Im Normalstrombetrieb, wie in Figur 2 dargestellt, überbrücken die Relais 204 und 206 jeweils ein Anschlusspaar 208 und 210 bzw. 212 und 214, die für die Versorgung von LEDs im Notstrombetrieb eingesetzt werden können.

Im Fall des Ausfalls des Normalnetzes, wenn ein Signal auf ein Not-Netzeingang des LED-Betriebsgeräts gegeben wird, schalten auch die Relais 204 und 206 um, so dass jeweils einer der Ausgänge der Notstrombrücke 210 bzw. 212 mit einer Gleichspannungsversorgung eines internen oder externen Energiespeichers 216 verbunden wird. Vorzugsweise ist, wie in der Figur 2 und 3 dargestellt, der Energiespeicher 216 extern an dem LED-Betriebsgerät angeschlossen und wird durch ein DC-DC-Konverter auf die erforderliche Betriebsspannung gebracht, um diese bei entsprechender Stellung der Relais 204 und 206 mit den Ausgängen 210 und 212 für den Plus- und den Minus-Anschluss für den Notfallbetrieb zu verbinden.

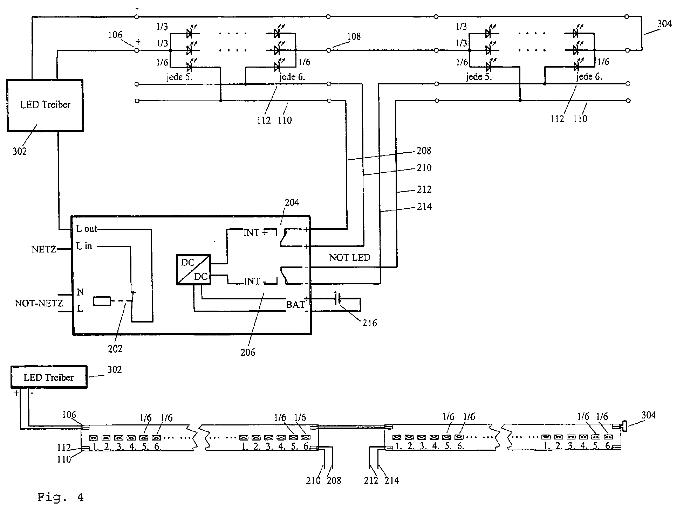

Eine Anordnung aus zwei der LED-Boards, wie in Verbindung mit Figur 1 beschrieben, und einem LED-Betriebsgerät, wie in Verbindung mit den Figuren 2 und 3 beschrieben, ist in Figur 4 dargestellt. Der Netzausgang Lₒᵤₜ des LED-Betriebsgeräts wird mit einem LED-Treiber 302 verbunden. Dieser gibt eine Versorgungsgleichspannung für die LED-Boards ab. Der Plus-Pol der Versorgungsspannung wird mit dem Spannungseingang 106 des ersten LED-Boards verbunden. Der Spannungsausgang 108 des ersten LED-Boards ist mit dem Spannungseingang 106 des zweiten LED-Boards verbunden. Der Spannungsausgang 108 des zweiten LED-Boards ist über eine Brücke 304 über eine Durchgangsleitung der LED-Boards mit dem Minus-Pol der Versorgungsspannung verbunden.

Ferner sind die Ausgänge für die Notstrombrücke 110 und 112 jeweils mit den Anschlüssen 208 und 210 bzw. 212 und 214 des LED-Betriebsgerätes verbunden.

Im Normalstrombetrieb, welcher in Figur 4 dargestellt ist, versorgt der LED-Treiber 302 beide hintereinandergeschalteten LED-Boards mit einer Gleichspannung. Die durchgehenden Reihen von LEDs 102 und 104 und die beiden aus jeweils zwei Teilstücken 104 bestehenden LED-Reihen des ersten und des zweiten LED-Boards werden parallel mit der Versorgungs-spannung des LED-Treibers 302 betrieben. In diesem Zustand leuchten alle LEDs, wie in der Aufsicht auf den LED-Treiber in der unteren Figurenhälfte der Figur 4 durch die Kreuze in den LEDs dargestellt ist.

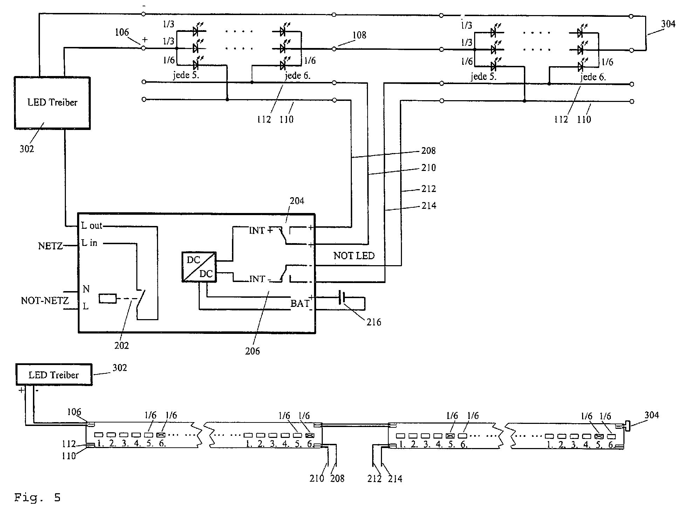

Im Fall einer Unterbrechung des Normalnetzes wird, wie in Figur 5 dargestellt, durch ein elektrisches Signal am Not-Netz das Relais 202 des LED-Betriebsgerätes geöffnet und damit die Versorgung des LED-Treibers 302 unterbrechen. Ferner werden die Relais 204 und 206 umgeschaltet, so dass der Anschluss 210 an einem internen Plus-Pol des LED-Betriebsgerätes und der Anschluss 212 an einem Minus-Pol des LED-Betriebsgerätes anliegen, wobei die internen Plus- und Minus-Pole mit einem wiederaufladbaren Energiespeicher 216 der innerhalb und außerhalb des LED-Betriebsgerätes angeordnet ist, über den DC-DC-Wandler gespeist werden. In diesem Schaltungszustand fließt ein Strom von dem Anschluss 210 des LED-Betriebsgerätes zum Eingang 112 des ersten LED-Boards und durch die LEDs des zweiten Teilstücks 104 der aus zwei Teilstücken bestehenden LED-Reihe. Am Ausgang 108 des ersten LED-Boards, welcher mit dem Eingang 106 des zweiten LED-Boards verbunden ist, fließt der Strom weiter durch das erste Teilstück 104 des zweiten LED-Boards und zurück durch den Ausgang 110 des zweiten LED-Boards zu dem Anschluss 214 des LED-Betriebsgeräts, der den Minus-Pol der Notstromversorgung bildet. In diesem Zustand leuchten daher die LEDs des zweiten Teilstücks 104 der ersten LED-Baugruppe und des ersten Teilstücks 104 der zweite LED-Baugruppe.

Wie in der Aufsicht in der unteren Figurenhälfte der Figur 5 dargestellt, leuchten daher jede sechste der LEDs in dem ersten LED-Board und jede fünfte LED in dem zweiten LED-Board. Dadurch ist insgesamt ein Sechstel der LEDs in Betrieb, die in regelmäßigen Abständen über die LED-Boards verteilt sind.

An der vorhergehend dargestellten Ausführungsform können zahlreiche Änderungen vorgenommen werden, ohne vom Umfang der Erfindung, der durch die Ansprüche definiert ist, abzuweichen. Insbesondere sind die LED-Boards nicht auf genau zwei durchgehende LED-Reihen und eine aus zwei Teilstücken bestehende LED-Reihe beschränkt. Es können weniger oder mehr durchgehende LED-Reihen vorgesehen sein. Dementsprechend sind mehr oder weniger LEDs vorhanden, die nur im Normalstrombetrieb leuchten.

### Bezugszeichenliste:

- 102: durchgehende LED-Reihe
- 104: Teilstück einer LED-Reihe
- 106: Spannungseingang
- 108: Spannungsausgang
- 110: Anschluss für Notstrombrücke
- 112: Anschluss für Notstrombrücke
- 202: Relais
- 204: Relais
- 206: Relais
- 208: Anschluss für Notstrombrücke
- 210: Anschluss für Notstrombrücke
- 212: Anschluss für Notstrombrücke
- 214: Anschluss für Notstrombrücke
- 216: Energiespeicher
- 302: LED-Treiber
- 304: Brücke

## Patentansprüche

1. LED-Board mit einer Vielzahl von LEDs, einem Spannungseingang und -ausgang (106, 108) zum Anschluss an eine Versorgungsspannung eines mit einem externen LED-Betriebsgerät verbundenen LED-Treibers (302),
und zwei Notstromanschlüssen (110, 112) zum Anschluss an eine Notstrombrücke des externen LED-Betriebsgerätes,
wobei ein Teil der Vielzahl von LEDs in wenigstens einer durchgehenden Reihe (102) von LEDs geschaltet ist, deren Anfang und Ende an dem Spannungseingang und -ausgang (106, 108) der Versorgungsspannung anliegt,
und weitere LEDs in einer aus zwei Teilstücken (104) bestehenden Reihe von LEDs geschaltet sind, wobei jedes Teilstück (104) eine oder mehrere LEDs aufweist und der Anfang des ersten Teilstücks und das Ende des zweiten Teilstücks parallel zu der durchgehenden LED-Reihe (102) geschaltet sind und das Ende des ersten Teilstücks (104) und der Anfang des zweiten Teilstücks (104) an den zwei Notstromanschlüssen (110, 112) für die Notstrombrücke anliegen.

2. LED-Board nach Anspruch 1, wobei das erste und das zweite Teilstück (104) der aus zwei Teilstücken bestehenden LED-Reihe jeweils die gleiche Anzahl von LEDs aufweist.

3. LED-Board nach Anspruch 1 oder 2, wobei die Summe der LEDs in dem ersten und zweiten Teilstück (104) der Anzahl von LEDs in der wenigstens einen durchgehenden Reihe (102) entspricht.

4. LED-Board nach einem der vorhergehenden Ansprüche, wobei die LEDs des ersten und zweiten Teilstücks(104) in regelmäßigem Abstand zwischen den LEDs der wenigstens einen durchgehenden Reihe (102) angeordnet sind.

5. LED-Board nach einem der vorhergehenden Ansprüche, wobei das LED-Board noch wenigstens eine zweite durchgehende Reihe (102) von LEDs parallel zur ersten durchgehenden Reihe von LEDs aufweist.

6. LED-Board nach Anspruch 5, wobei die erste und zweite durchgehende Reihe (102) von LEDs jeweils die gleiche Anzahl von LEDs aufweist.

7. LED-Board nach Anspruch 6, wobei das LED-Board insgesamt sechs oder ein Vielfaches von sechs LEDs aufweist und jeweils ein Drittel der LEDs in der ersten und der zweiten durchgehenden Reihe (102) von LEDs enthalten sind und jeweils ein Sechstel der LEDs in dem ersten und dem zweiten Teilstück (104) der aus zwei Teilstücken bestehenden Reihe von LEDs enthalten sind.

8. LED-Board nach Anspruch 5 oder 6, wobei parallel zur ersten und zweiten durchgehenden Reihe (102) von LEDs noch eine oder mehrere weitere durchgehende Reihen (102) von LEDs vorgesehen sind, wobei vorzugsweise jede der durchgehenden Reihen (102) von LEDs die gleiche Anzahl von LEDs aufweist.

9. LED-Board nach einem der vorhergehenden Ansprüche, wobei das LED-Board N LEDs aufweist und j durchgehende Reihen (102) von LEDs aufweist und jede durchgehende Reihe (1/j+1). N LEDs aufweist und die zwei Teilstücke (104) der aus zwei Teilstücken bestehenden Reihe jeweils (1/2(j+1)). N LEDs aufweist.

10. LED-Board nach Anspruch 9, wobei die LEDs des ersten und zweiten Teilstücks (104) an jeweils der (2j-1)-ten und 2j-ten Stelle zwischen den übrigen LEDs der durchgehenden Reihen (102) angeordnet sind.

11. LED-Board nach einem der vorhergehenden Ansprüche, wobei die wenigstens eine durchgehende Reihe (102) von LEDs eine Vielzahl von LEDs in einer ersten Farbe aufweist und die aus zwei Teilstücken (104) bestehende Reihe von LEDs wenigstens teilweise LEDs einer anderen Farbe aufweisen.

12. Anordnung aus zwei LED-Boards nach jeweils einem der vorhergehenden Ansprüche und einem LED-Betriebsgerät, wobei
der Spannungsausgang (108) des ersten LED-Boards an dem Spannungseingang (106) des zweiten LED-Boards angeschlossen ist, der Spannungseingang (106) des ersten LED-Boards und der Spannungsausgang (108) des zweiten LED-Boards an einer Versorgungsspannung eines mit dem externen LED-Betriebsgerät verbundenen LED-Treibers (302) angeschlossen sind und
die zwei Notstromanschlüsse (110, 112) des ersten LED-Boards mit einer ersten Notstrombrücke des externen LED-Betriebsgeräts überbrückt sind und die zwei Notstromeingänge (110, 112) des zweiten LED-Boards mit einer zweiten Notstrombrücke des externen LED-Betriebsgerätes überbrückt sind,
wobei im Falle eines Ausfalls der Netzversorgung des LED-Betriebsgerätes die Versorgungsspannung unterbrochen ist,
die zwei Notstrombrücken geöffnet sind und der Notstromausgang des ersten LED-Boards und der Notstromeingang des zweiten LED-Boards an einer Notspannung des LED-Betriebsgerätes, anliegen.

13. Anordnung nach Anspruch 12, wobei die Notspannung des LED-Betriebsgeräts durch einen internen oder externen Energiespeicher (302) des LED-Betriebsgeräts gespeist wird.

## Claims

1. LED board with a plurality of LED's, a voltage input and output (106, 108) for the connection of a supply voltage of an LED driver (302) connected to an external LED operating device,
and two emergency current connections (110, 112) for connection to an emergency current bridge of the external LED operating device,
wherein a part of the plurality of LED's are connected in at least one continuous row (102) of LED's, of which the beginning and end are in contact at the voltage input and output (106, 108) of the supply voltage,
and further LED's are connected in a row of LED's consisting of two part pieces (104), wherein each part piece (104) comprises one or more LED's, and the beginning of the first part piece and the end of the second part piece are connected parallel to the continuous LED row (102), and the end of the first part piece (104) and the beginning of the second part piece (104) are in contact with the two emergency current connections (110, 112) for the emergency current bridge.

2. LED board according to claim 1, wherein the first and second part piece (104) of the LED row consisting of two part pieces comprise in each case the same number of LED's.

3. LED board according to claim 1 or 2, wherein the sum of the LED's in the first and second part piece (104) corresponds to the number of LED's in the at least one continuous row (102).

4. LED board according to any one of the preceding claims, wherein the LED's of the first and second part piece (104) are arranged at regular interval spacing between the LED's of the at least one continuous row (102).

5. LED board according to any one of the preceding claims, wherein the LED board further comprises at least one second continuous row (102) of LED's parallel to the first continuous row of LED's.

6. LED board according to claim 5, wherein the first and second continuous rows (102) of LED's comprise in each case the same number of LED's.

7. LED board according to claim 6, wherein the LED board comprises a total of six or a multiple of six LED's, and in each case a third of the LED's are contained in the first and the second continuous rows (102) of LED's and in each case a sixth part of the LED's are contained in the first and second part piece (104) of the row consisting of two part pieces.

8. LED board according to claim 5 or 6, wherein, provided parallel to the first and second continuous rows (102) of LED's, are a further one or more continuous rows (102) of LED's, wherein preferably each of the continuous rows (102) of LED's comprises the same number of LED's.

9. LED board according to one of the preceding claims, wherein the LED board comprises N LED's and j continuous rows (102) of LED's, and each continuous row comprises (1/j+1) . N LED's, and the two part pieces (104) of the row consisting of two part pieces comprise in each case (1/2(j+1)). N LED's.

10. LED board according to claim 9, wherein the LED's of the first and second part pieces (104) are arranged in each case at the (2j-1)-th and the 2j-th place between the other LED's of the continuous rows.

11. LED board according to any one of the preceding claims, wherein the at least one continuous row (102) of LED's comprises a plurality of LED's in a first colour and the row of LED's consisting of two part pieces (104) comprises at least partially LED's of another colour.

12. Arrangement of two LED boards in each case according to any one of the preceding claims, wherein
the voltage output (108) of the first LED board is connected to the voltage input (106) of the second LED board, the voltage input (106) of the first LED board and the voltage output (108) of the second LED board are connected to a supply voltage of an LED driver (302) connected to the external LED operating device, and
the two emergency current connections (110, 112) of the first LED board are bridged by a first emergency current bridge of the external LED operating device, and the two emergency current inputs (110, 112) of the second LED board are bridged by a second emergency current bridge of the external LED operating device,
wherein, in the event of a failure in the mains network supply of the LED operating device, the supply voltage is interrupted,
the two emergency current bridges and the emergency current output of the first LED board and the emergency current input of the second LED board are in contact with an emergency voltage of the LED operating device.

13. Arrangement according to claim 12, wherein the emergency voltage of the LED operating device is fed by an internal or external energy store (302) of the LED operating device.

## Revendications

1. Carte DEL avec une multiplicité de DEL, une entrée et une sortie de tension (106, 108) pour la connexion à une tension d'alimentation d'un pilote de DEL (302) raccordé à un appareil à DEL externe,
et deux connexions de courant de secours (110, 112) pour la connexion à un pont de courant de secours de l'appareil à DEL externe,
une partie de la multiplicité de DEL étant montée dans au moins un rangée (102) continue de DEL dont le début et la fin sont présentes à l'entrée et à la sortie de tension (106, 108) de la tension d'alimentation,
et d'autres DEL sont montées dans une rangée de DEL composée de deux pièces partielles (104), chaque pièce partielle (104) présentant une ou plusieurs DEL, et le début de la première pièce partielle et la fin de la deuxième pièce partielle étant montés parallèlement à la rangée de DEL (102) continue, et la fin de la première pièce partielle (104) et le début de la deuxième pièce partielle (104) étant présents sur les deux connexions de courant de secours (110, 112) pour le pont de courant de secours.

2. Carte DEL selon la revendication 1, la première et la deuxième pièce partielle (104) de la rangée de DEL composée de deux pièces partielles présentant le même nombre de DEL.

3. Carte DEL selon la revendication 1 ou 2, la somme des DEL dans la première et la deuxième pièce partielle (104) correspondant au nombre de DEL dans la rangée (102) continue au moins au nombre de un.

4. Carte DEL selon l'une des revendications précédentes, les DEL de la première et de la deuxième pièce partielle (104) étant disposées à intervalles réguliers entre les DEL de la rangée (102) continue au moins au nombre de un.

5. Carte DEL selon l'une des revendications précédentes, la carte DEL présentant encore au moins une deuxième rangée (102) continue de DEL parallèle à la première rangée continue de DEL.

6. Carte DEL selon la revendication 5, la première et la deuxième rangée (102) continue de DEL présentant respectivement le même nombre de DEL.

7. Carte DEL selon la revendication 6, la carte DEL présentant au total six ou un multiple de six DEL, et respectivement un tiers des DEL étant contenues dans la première et la deuxième rangée (102) continue de DEL, et respectivement un sixième de DEL étant contenues dans la première et la deuxième pièce partielle (104) de la rangée de DEL composée de deux pièces partielles.

8. Carte DEL selon la revendication 5 ou 6, encore une ou plusieurs rangées (102) continues de DEL étant prévues parallèlement à la première et à la deuxième rangée (102) continue de DEL, chacune des rangées (102) continues de DEL présentant de préférence le même nombre de DEL.

9. Carte DEL selon l'une des revendications précédentes, la carte DEL présentant N DEL et j rangées (102) continues de DEL, et chaque rangée continue présentant (1/j+1). N DEL, et les deux pièces partielles (104) de la rangée composée de deux pièces partielles présentant respectivement (1/2(j+1)). N DEL.

10. Carte DEL selon la revendication 9, les DEL de la première et de la deuxième pièce partielle (104) étant disposées sur respectivement le (2j-1)^{ième} et le 2j^{ième} emplacement entre les autres DEL des rangées (102) continues.

11. Carte DEL selon l'une des revendications précédentes, la rangée (102) continue de DEL au moins au nombre de un présentant une multiplicité de DEL d'une première couleur, et la rangée de DEL composée de deux pièces partielles (104) présentant au moins partiellement des DEL d'une autre couleur.

12. Agencement de deux cartes DEL selon respectivement l'une des revendications précédentes et d'un appareil à DEL,
la sortie de tension (108) de la première carte DEL étant fermée sur l'entrée de tension (106) de la deuxième carte DEL, l'entrée de tension (106) de la première carte DEL et la sortie de tension (108) de la deuxième carte DEL étant connectées à une tension d'alimentation d'un pilote de DEL (302) raccordé à l'appareil à DEL externe, et
les deux connexions de courant de secours (110, 112) de la première carte DEL étant pontées avec un premier pont de courant de secours de l'appareil à DEL externe, et les deux entrées de courant de secours (110, 112) de la deuxième carte DEL étant pontées avec un pont de courant de secours de l'appareil à DEL externe,
la tension d'alimentation étant interrompue en cas de panne de l'alimentation secteur de l'appareil à DEL,
les deux ponts de courant de secours étant ouverts et la sortie de courant de secours de la première carte DEL et l'entrée de courant de secours de la deuxième carte DEL étant présentes sur une tension de secours de l'appareil à DEL.

13. Agencement selon la revendication 12, la tension de secours de l'appareil à DEL étant introduite par un accumulateur d'énergie (302) interne ou externe de l'appareil à DEL.
